Europäisches Patentamt

European Patent Office

Office européen des brevets

(11) Publication number: **0 035 370**
**A1**

(12) # EUROPEAN PATENT APPLICATION

(21) Application number: 81300796.0

(51) Int. Cl.³: **B 60 T 13/24**

(22) Date of filing: 26.02.81

(30) Priority: 27.02.80 JP 24390/80 U

(43) Date of publication of application: 09.09.81
Bulletin 81/36

(84) Designated Contracting States: DE FR GB IT

(71) Applicant: **TOKICO LTD., 6-3, Fujimi, 1-Chome
Kawasaki-Ku, Kawasaki-shi Kanagawa-ken (JP)**

(72) Inventor: **Tateoka, Kiyoshi, 342, Engyo, Fujisawa-shi
Kanagawa-ken (JP)**
Inventor: **Ando, Hiromi, 1-14-12, Takadanobaba
Shinjuku-ku, Tokyo (JP)**

(74) Representative: **Jones, Colin et al, W.P. THOMPSON &
CO. Coopers Building Church Street, Liverpool L1 3AB
(GB)**

(54) **Pneumatic servo booster.**

(57) A pneumatic servo booster has a main body (1), a flexible diaphragm (2), a power piston and valve body assembly (3, 6) co-operating with the diaphragm to divide the interior of the main body into front and rear chambers (4 and 5). The power piston and valve body assembly slidably and sealingly extends through the rear end of the main body and receives therein a valve mechanism including a poppet valve (11) and a plunger (10) connected to an input rod (9). A holding chamber (18) is defined in the front side of the power piston and valve body assembly to receive therein a resilient reaction disc (16) which transmits the output force to an output rod (15) and the reaction force to the plunger (10). A holding member (17c) is provided on the front side of the holding chamber for supporting and guiding a reduced diameter portion (15A) of the output rod at a location adjacent to the inner end (15B) thereof.

DESCRIPTION

"PNEUMATIC SERVO BOOSTER"

This invention relates to pneumatic servo boosters of the kind including a main body, a flexible diaphragm, a power piston and valve body assembly co-operating with the diaphragm to divide the interior of the main body into front and rear chambers and extending slidably through the rear end of the main body, a plunger connected to an input rod and fitting slidably with a valve body portion of the power piston and valve body assembly, an output rod extending through the front chamber with the inner end thereof being connected to a power piston portion of the power piston and valve body assembly, and a reaction disc for transmitting output force from the power piston portion of the power piston and valve body assembly to the output rod and transmitting reaction force to the plunger.

The pneumatic servo boosters of the kind aforementioned are disclosed in such as US Patent Specification 3,279,327, 3,312,147 and 4,005,639.

The inner end of the output rod is usually received slidably in a holding chamber which is defined on or in the front end of the power piston and valve body assembly with the outer circumference of an increased diameter inner end portion of the output rod slidably contacting with the circumferential wall of the holding chamber.

In decreasing the axial overall length of the pneumatic servo booster of the aforementioned kind without decreasing the stroke of the output rod, it may be considered possible to decrease the axial length of the inner end portion of the output rod; however, the contacting area between the inner end portion of the output rod and the circumferential wall of the holding chamber will accordingly decrease, whereby the inner end portion of the output rod will not be able to support effectively

2.

the output rod in maintaining the axial alignment of the output rod, i.e., the output rod will tilt in transmitting the output force and the outer circumference of the inner end portion of the output rod will bind in the circumferential wall of the holding chamber, thereby impeding the operation of the servo booster.

An object of the invention is to avoid the shortcoming aforementioned and, according to the invention, a supporting member is provided on the front side of the holding chamber for slidably supporting the output rod at a location adjacent to the increased diameter inner end portion of the output rod. Thus, the axial overall length of the servo booster can be reduced as compared with prior art devices.

The invention will now be described in detail in conjunction with the accompanying drawings exemplifying some preferred embodiments of the invention, in which:-

Fig. 1 is a longitudinal sectional view of a pneumatic servo booster according to the invention; and

Fig. 2 is a longitudinal sectional view of a second embodiment of the invention.

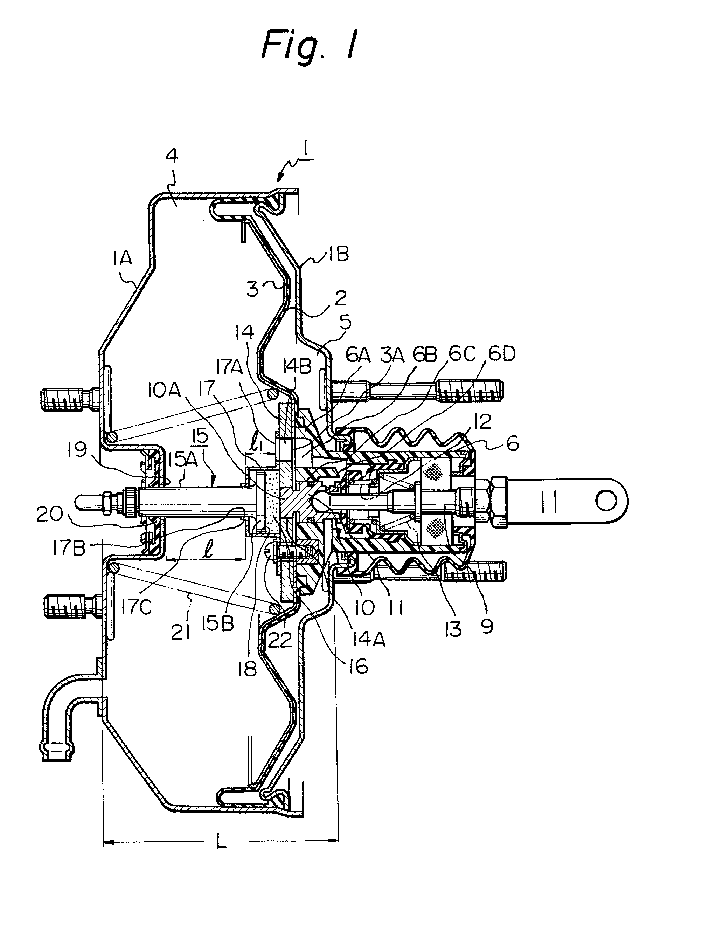

The pneumatic servo booster shown in Fig. 1 comprises a main body 1 formed of a front shell 1A and a rear shell 1B, and the interior of the main body 1 is divided into a front chamber 4 and a rear chamber 5 by a flexible diaphragm 2, a plate-like power piston 3 attached to the diaphragm 2 and a valve body 6. The power piston 3 and the valve body 6 constitute a power piston and valve body assembly.

The valve body 6 is formed of such as phenol resin, and the front end surface 6A of the valve body 6 is abuttingly secured to the rear surface of the piston plate 3. There are provided in the valve body 6, a valve seat 6D and a cylinder portion 6C. The cylinder portion 6C slidably receives therein a plunger 10

3.

which is connected to the inner end of an input rod 9. The input rod 9 extends axially through a cylindrical portion of the valve body 6 which extends through the rear chamber 5 and slidably and sealingly through the rear end of the rear shell 1B. A poppet valve 11 is mounted in the cylindrical portion of the valve body 6 and is urged toward the valve seat 6D of the valve body 6 and toward a valve seat formed on the outer end of the plunger 10 by a spring 12. A spring 13 acts to bias the input rod 9 rearwards. The radially inner side of the poppet valve 11 is communicated with the atmosphere.

A supporting plate 14 is secured to the front side of the power piston 3, and the inner end portion 10A of the plunger 10 is slidably received in a central bore 14A of the supporting plate 14. A generally hat-shaped holder 17 is secured to the front side of the supporting plate 14 and defines therein a holding chamber 18. The holding chamber receives therein a reaction disc 16 formed of resilient material such as rubber and a large diameter inner end portion 15B of an output rod 15. The output rod 15 has a reduced diameter portion 15A along the substantial part of its length and extends through the front chamber 4 and sealingly and slidably through the front shell 1A. The holder 17, the supporting plate 14, the power piston 3 and the valve body 6 are secured together by screws 18 (only one is shown in the drawing) which are screwed into the inner end portion of the valve body 6. The inner circumference of the diaphragm 2 is clamped between the valve body 6 and the piston plate 3, and the outer circumference of the diaphragm 2 is clamped between the front and rear shells 1A and 1B. There are provided communicating openings 17A, 14B, 3A and 6B respectively in the holder 17, the supporting plate 14, the power

4.

piston 3 and the valve body 6 for communicating the front chamber 4 with the rear chamber 5 through the clearance between the valve seat 6D and the poppet valve 11.

A seal 20 is provided between the output rod 6 and the front shell 1A. A return spring 21 is disposed in the front chamber 4 to urge the power piston and valve body assembly rearwards.

The holder 17 has a central bore 17B for passing therethrough the reduce diameter portion 15A of the output rod 15, and a tubular guide 17C is mounted in the bore 17B. The guide 17C slidably supports the reduced diameter portion 15A of the output rod 15 at a location adjacent to the large diameter inner end portion 15B of the output rod 15 so as to maintain the axial alignment of the output rod 15 with respect to the power piston and valve body assembly. It will be noted that the diameter of a bore 19 formed in the front shell 1A and through which the output rod 15 extends is larger than the outer diameter of the guide 17C by which the output rod is slidably supported.

In reducing the overall length L of the servo booster with a predetermined stroke length of the power piston 3 being assured, it is necessary to reduce the width of the axial length of the inner end portion 15B of the output rod 15. It will be noted that, in the embodiment shown in Fig. 1, there is a relatively large recess in the front end of the front shell 1A, however, the recess is utilized to receive the rear end of a master cylinder (not shown) which is mounted on the front shell 1A, and the object of the invention is, in the exact meaning, to reduce the overall length of the servo booster and master cylinder assembly as measured from the rear surface of the rear shell to the tip end of the master cylinder. The servo booster and the master cylinder assembly is usually mounted on such as a toe-board of an automobile in a cantilever style and the overall length aforesaid determines the projecting length of the cantilever. Further, it is advantageous to increase the volume of the front chamber 4 for assuring the reliability of the servo booster against possible failure of the source of vacuum pressure.

The operation of the servo booster of Fig. 1 is similar to that of conventional servo boosters and will now be explained briefly.

The servo booster is received in such as an engine compartment of an automobile and is mounted on such as a toe-board partitioning the engine compartment with a driver's compartment by utilizing bolts secured to the rear shell 1B. A master cylinder of hydraulic braking system is secured to the front shell 1A, and a source of vacuum pressure such as intake manifold of an engine is connected to the front chamber 4.

When a brake pedal (not shown) is depressed, the input rod 9 moves leftward against the spring 13 so that the plunger 10 and the poppet valve 11 move leftward with respect to the valve body 6. The poppet valve 11 firstly engages with the valve seat 6D thereby intercepting the communication between the front and rear chambers 4 and 5. By moving further the input rod 9 in the leftward direction the rear end of the plunger 10 separates from the poppet valve 11, and the atmospheric air is introduced into the rear chamber 5 from the inside of the poppet valve 11. A differential pressure is generated between the front and rear chambers 4 and 5, and a thrust acts on the power piston 3 in the leftward direction. The thrust is transmitted to the output rod 15 through the reaction disc 16, thereby actuating the master cylinder. The tip end portion of the output rod 15 is supported on the front shell 1A through the seal 20, and a portion adjacent to the increased diameter inner end portion 15B of the output rod 15 is supported on the tubular guide 17C, thus the output rod can reliably maintain the aligned attitude excluding any inclination with respect to the axis of the servo booster.

A reaction force of the output rod 15 is transmitted to the plunger 10 through the reaction disc 16. The ratio between the input force applied on the input rod 9 and the output force transmitted to the output rod 15 or the input output ratio is determined by the ratio between the area of the tip end of the plunger 10 or the area of the bore 14A slidably receiving the tip end of the plunger 10 and the area of the inner end portion 15B of the output rod 15.

When the power piston and valve body assembly moves leftward, the poppet valve 11 moves leftward maintaining the engagement with the valve seat 6D until the poppet valve 11 engages with the rear end of the plunger 10. The communication between the atmosphere and the rear chamber 5 is interrupted, and an equilibrium condition is established.

In releasing the depressing force applied on the brake pedal, the power piston and valve body assembly 3, 6 returns to its initial position shown in the drawing by the force of the return spring 21. When the return speed of the power piston is larger than the return speed of the master cylinder, the input rod 15 may tend to escape out of the holding chamber 18, however, since the reduced diameter portion 15A of the output rod 15 is supported by the tubular guide 17C, the output rod 15 is reliably prevented from escaping out of the holding chamber 18.

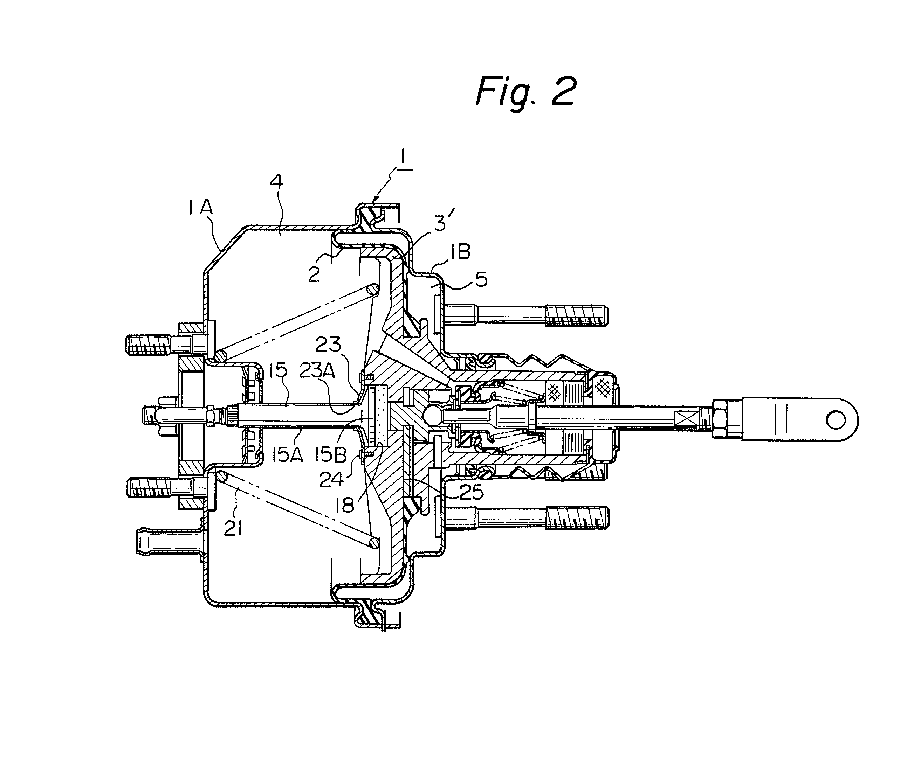

Fig. 2 shows another embodiment of the invention which is generally similar to the first embodiment and corresponding parts are depicted by the same reference numerals, thus, the description therefor is omitted.

The servo booster illustrated in Fig. 2 comprises an integral power piston and valve body 3' formed of such as synthetic resin. The holding chamber 18 is defined by an annular recess provided in the front end of the power piston and valve body 3' to receive therein the reaction disc and the inner end 15B of the output rod 15. There is provided on the front end of the chamber 18 a cover plate 23 which is secured to the member 3' by screws 24 and has a guide 23A on the inner circumference thereof for slidably receiving and guiding the reduced diameter portion 15A of the output rod 15 at the location adjacent to the inner end portion 15B of the output rod 15.

Shown at 25 in Fig. 2 is a stop restricting the relative axial movement of the plunger with respect to the member 3'.

Although the invention has heretofore been described with respect to two preferred embodiments, it will be understood that various changes or modifications may easily be applied for those skilled in the art, for example, the construction of the main body or the valve mechanism may be changed as desired.

According to the invention, the intermediate portion or a portion adjacent to the inner end of the output rod is supported and guided by the supporting member, thus, the axial length of the increased diameter inner end portion of the output rod can be reduced without causing any misalignment of the inner end portion of the output rod with respect to the circumferential wall of the holding chamber in which the inner end portion of the output rod and the resilient

8.

reaction disc are received.  Thus, the operation of the servo booster can reliably be assured.

Further, the invention may be applied to existing pneumatic servo boosters by a simple modification.

9.

## CLAIMS

1. A pneumatic servo booster comprising a main body (1), a flexible diaphragm (2), a power piston and valve body assembly (3,6) co-operating with the diaphragm to divide the interior of the main body into front and rear chambers (4 and 5) and extending slidably through the rear end of the main body, a plunger (10) connected to an input rod (9) and fitting slidably within the valve body (6) of said assembly, a holding chamber (18) defined in said assembly (3,6) at the side the front side thereof facing the front chamber (4), an output rod (15) extending through the front chamber with the inner end thereof being received in the holding chamber (18), a resilient reaction disc (16) received in the holding chamber and transmitting the output force to the output rod and the reaction force to the plunger, characterised in that a supporting member (17C,23A) is provided on said assembly at the front side of the holding chamber and slidably supports the output rod (15).

2. A pneumatic servo booster as claimed in claim 1, wherein the output rod has a reduced diameter portion (15A) along the substantial part of its length and an enlarged diameter inner end (15B) which is received in the holding chamber (18), and the supporting member (17) slidably supports the reduced diameter portion (15A) of the output rod.

3. A pneumatic servo booster as claimed in claim 1 or 2, wherein the power piston and valve body assembly comprises a plate-like power piston (3) provided on the front side of the diaphragm (2) and attached thereto, and a valve body (6) provided on the rear side of the diaphragm (2) and secured integrally to a piston plate (14) with the inner peripheral portion of the diaphragm being clamped therebetween; and the holding chamber (18) is defined by a generally

10.

hat-shaped member (17) secured to the front side of the piston plate, said hat-shaped member having a central opening on which the supporting member (17C) is mounted or formed.

4. A pneumatic servo booster as claimed in claim 1 or 2, wherein the power piston and valve body assembly comprises an integral power piston (3') having a flange portion on the inner end to which the resilient diaphragm (2) is secured, and a recess defining said holding chamber (18) is formed in the front surface of the power piston.

Fig. 1

*Fig. 2*

0035370

European Patent Office

**EUROPEAN SEARCH REPORT**

Application number

EP 81 30 0796

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | GB - A - 2 021 716 (TEVES)<br>* Page 1, line 128 - page 2, line 92; page 2, line 117 - page 3, line 5; figures 2,4 *<br>-- | 1,3 | B 60 T 13/24 |
| | GB - A - 1 515 690 (AUTOMOTIVE PRO-DUCTS)<br>* Page 2, lines 77-108; figures *<br>-- | 1-3 | |
| | EP - A - 0 004 477 (TOKICO)<br>* Page 3, line 26 - page 5, line 18; figures *<br>-- | 1,2,4 | TECHNICAL FIELDS SEARCHED (Int. Cl.³)<br><br>B 60 T 13/00 |
| A | GB - A - 1 054 824 (ELECTROFLO CO.) | 1 | |
| A | GB - A - 2 022 209 (TOKICO) | 1 | |
| D | US - A - 3 279 327 (FRENCH) | 1 | |
| D | US - A - 3 312 147 (REICHARD) | 1 | |
| D | US - A - 4 005 639 (WELSH) | 1 | |
| | ---- | | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |

| | &: member of the same patent family, corresponding document |
|---|---|
| The present search report has been drawn up for all claims | |

| Place of search | Date of completion of the search | Examiner |
|---|---|---|
| The Hague | 11-06-1981 | BRAEMS |

EPO Form 1503.1   06.78